# EUROPEAN PATENT SPECIFICATION

(11) **EP 0 537 680 B1**
(45) Date of publication and mention of the grant of the patent: **13.08.1997**
(21) Application number: 92117462.9
(22) Date of filing: 13.10.1992
(51) Int. Cl.: B41J 2/355

(54) **Thermal print head driving circuit**
Steuerschaltung für Thermodruckkopf
Circuit de commande d'une tête d'impression thermique

(30) Priority: 14.10.1991 JP 292039/91
(43) Date of publication of application: 21.04.1993
(73) Proprietor: MITSUBISHI DENKI KABUSHIKI KAISHA, Tokyo 100 (JP)
(72) Inventor: Itoh, Hiroshi, c/o Mitsubishi Denki K.K., 8-chome, Amagasaki-shi, Hyogo (JP)
(74) Representative: Bohnenberger, Johannes, Dr.

(56) References cited:
- WO-A-88/10042
- US-A- 4 492 482
- PATENT ABSTRACTS OF JAPAN vol. 15, no. 186 (M-1112)14 May 1991 & JP-A-30 45 363 (SUSUMU KOGYO K.K.) 26 February 1991
- PATENT ABSTRACTS OF JAPAN vol. 14, no. 29 (M-922)19 January 1990 & JP-A-12 67 063 (MITSUBISHI ELECTRIC CORP). 24 October 1989
- PATENT ABSTRACTS OF JAPAN vol. 10, no. 216 (M-502)29 July 1986 & JP-A-61 053 046 (FUJI XEROX CO LTD) 15 March 1986

## Description

The present invention relates to a driving circuit for driving elements such as exothermic resistors of a thermal head.

The Patent Abstracts of Japan, Vol. 15, No. 186 (M-1112) of May 14, 1991 corresponding to JP-A-3045363 discloses a printing control device for a thermal head. A control signal as an initial preheating signal indicating all bits ON is sent to a thermal head drive circuit under control of a preheating control circuit. The preheating data as well as the printing data are provided serially to shift registers and latch circuits for the respective heating elements of the thermal head.

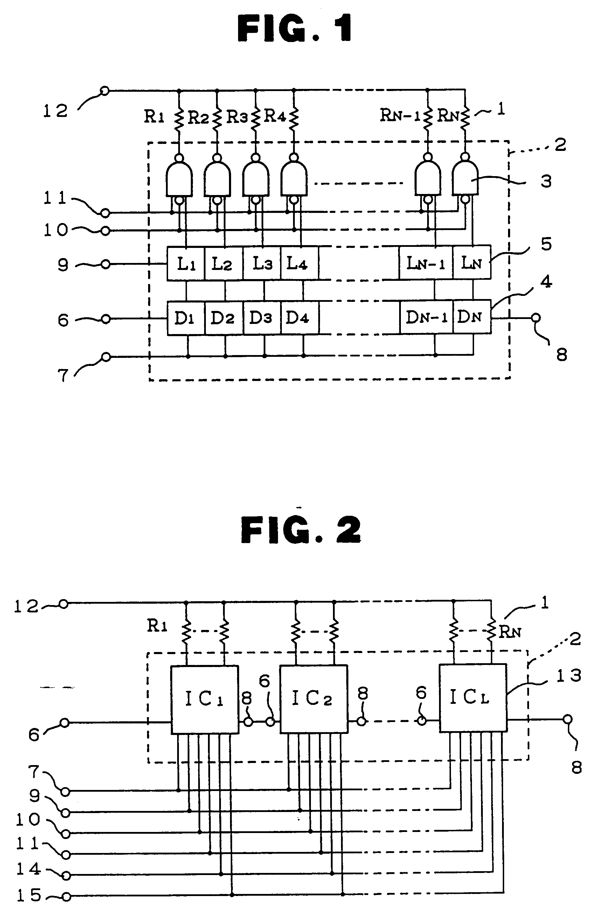

Fig. 1 is a circuit diagram showing another conventional driving circuit. In figure 1 are N exothermic resistors of a thermal head as driven elements, and Fig. 2 is a driving circuit for driving these N exothermic resistors 1 on the diagram, supplying each of them with driving information individually.

In driving circuit 2, objects marked 3 are NAND gates which act as switching elements and are provided corresponding to the respective N exothermic resistors. Part 4 are shift registers for shifting the serial signal information to be the driving information for the exothermic resistors 1 in synchronization with a clock signal, and 5 are latch circuits as holding means for holding the contents of the shift registers 4 according to a specified latch signal.

Part 6 is an input terminal for inputting the signal information serially to the shift registers 4 and 7 is a clock signal terminal from which the clock signal for the shift registers 4 is to be input. The points 8 are output terminals from which the signal information which is shifted inside the shift registers 4 is to be output, and 9 is a latch terminal from which a latch signal is to be input to the latch circuits 5. Part 10 is a strobe terminal to which a strobe signal to the NAND circuits 3 is to be input, 11 is a BEO terminal to which a negative enable output (hereinafter referred to as BEO) to the NAND circuits 3 is to be input, and 12 is a common electrode to which each of the exothermic resistors 1 is commonly connected.

Fig. 2 is a circuit diagram of a thermal head as an example of an electronic part actually constituted based on the circuit shown in Fig. 1. In the figure, 13 are L pieces of integrated circuits (hereinafter referred to as ICs) which constitute the driving circuit 2, and each of them is constituted with N/L (the number of the exothermic resistors 1 N, divided by the number of IC's 13 marked L) NAND circuits, N/L stage shift registers and N/L latch circuits, and the IC's are connected in series with respective input terminals 6 and output terminals 8.

When a thermal head is, for example, of an A4 size of 8 bits per mm which is generally used in facsimile, etc., the total number of exothermic resistors 1 is 1723 and the total number of stages of the shift registers 4 is 1728, and when the constitutional unit of an IC 13 is assumed to be 64 bits, then it is found that 27 pieces of IC's 13 are connected. When split printing is to be performed, strobe terminals 10 and BEO terminals 11 of a number of systems corresponding to respective groups of IC's 13, composed of several IC's 13 have to be introduced.

Part 14 is a power supply terminal through which power is to be supplied to the IC's 13, and 15 is a terminal to be connected to the ground. The other elements are similar to those shown in Fig. 1 so that the explanation of them will be omitted.

Next, the operation will be explained. The thermal head mentioned in the above is a main part of an apparatus of a thermosensitive recording system, and recently the recording system has widely utilized because of its simplicity. In the thermal head, numerous exothermic resistors are arranged on a substrate, and these resistors are selectively energized and the part of the printing paper which is pressed against an energized resistor is colored and printed. There are many kinds of driving systems and typical examples will be explained in the following.

The signal information for driving the exothermic resistors 1 is input to the shift registers 4 from the input terminal 6 in series, and it is shifted in order inside the shift registers 4 in synchronization with the clock signal given through the clock signal terminal 7. When the signal information for one line is input to the shift registers 4, a latch signal is input to the latch terminal 9 for the latch circuits 5, and data is transferred to the latch circuits 5 which hold the contents of the shift registers 4 according to the latch signal. The reason why the shift registers and the latch circuits are constituted as described above is to make it possible to transfer the signal information during the driving of exothermic resistors 1. The contents of the latch circuits 5 become the driving information for the exothermic resistors 1.

Each switching element 3 (NAND circuit) corresponding to each of the exothermic resistors 1 executes switching operation based on a strobe signal input to the strobe terminal 10, a BEO signal input to the BEO terminal 11 and the signal logic state of the driving information held in the latch circuit 5. In other words, the period of time during which the strobe signal is in an L level and the BEO signal is in an H level is the driving period of time for an exothermic resistor 1. The strobe signal and the BEO signal function respectively as decision signals for deciding the driving period time for exothermic resistors 1.

The reason why the operation logic of a strobe signal is made to be opposite to that of a BEO signal is to prevent an erroneous operation in a period of signal instability which can occur during ON/OFF operation of the power supply in an apparatus using such a thermal head as mentioned in the above. The erroneous operation of a thermal head in the case of ON/OFF operation of the power supply can be prevented, for example, by making a BEO signal become the detection signal of a voltage detector circuit of the power supply circuit.

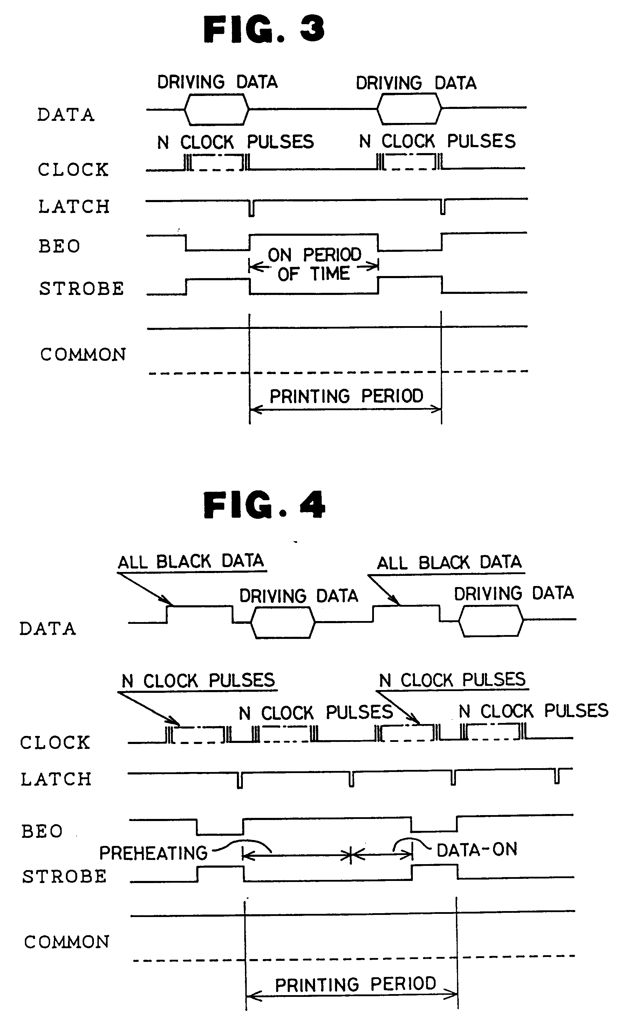

Fig. 3 is a timing chart showing the operation of the driving circuit shown in Fig. 1. In the figure, COMMON is a voltage to be input to the common electrode 12, and may be 12 V or 24 V for example. DATA is signal information to be input to the input terminal 6, CLOCK is a clock signal to be input to the clock terminal 7, LATCH is a latch signal to be input to the latch terminal 9, BEO is a BEO signal to be input to the BEO terminal 11 and STROBE is a strobe signal to be input to the strobe terminal 10. A thermal head records an image on thermosensible paper by selectively energizing exothermic resistors 1, and the energizing time is adjusted depending on the ambient temperature or the temperature of a thermal head itself to upgrade image quality. Normally, the energizing time is controlled to be long when the temperature is low and to be short when the temperature is high. There is also a control method in which the temperature of a thermal head itself is raised by making a current flow in all exothermic resistors 1, the current which is not so large as to record an image on a thermosensible paper in a waiting time for preventing degradation of image quality caused by an insufficient energizing period of time in a low ambient temperature.

An example of a timing chart of an apparatus having the control method as mentioned in the above is shown in Fig. 4. As shown in the figure, an exothermic resistor 1 is energized in the period of time obtained by adding a period of time of "data-on by the driving information" to a period of time of "preheating by the signal information" for all black data. In this case, considering a countermeasure against electromagnetic interference (hereinafter referred to as EMI), it is desirable to make the transmission velocity of a clock signal lower than 500 kHz.

In the conventional driving circuit as described above, there are problems. It is necessary to transmit signal information for preheating when the ambient temperature is low, and a printing velocity is decided by the transmission velocity of a clock signal. Also, degradation of picture quality is caused by the increase in heat accumulated by energizing the adjacent exothermic resistors 1 for preheating, and picture quality is degraded by heat conductance to adjacent exothermic resistors 1 when a continuous exothermic resistor 1 is formed with a thick film in a belt shape.

One object of the present invention is to offer a driving circuit having improved means for supplying preheating information in rapid manner.

Another object of the present invention is to offer a driving circuit in which an erroneous operation during the time of signal instability can be prevented, for example when switching the power supply ON/OFF.

A further object of the present invention is to offer a driving circuit in which there is little degradation in image quality caused by heat accumulation or heat conduction.

An additional object of the present invention is to offer a driving circuit in which a safety measure can be taken if connecting cable breaks.

In order to achieve the above-mentioned, a driving circuit is provided according to the present invention as defined in claim 1. Preheating information for driving the driven elements is supplied independent of the driving information held in the holding means.

A driving circuit according to one embodiment of the present invention provides an all-on signal for deciding the preheating period of time. The all-on signal may have 2 kinds of signal logic (high or low) for deciding the preheating period. This embodiment allows prevention of erroneous operation with an unstable signal during an ON/OFF operation of the power supply.

The above-mentioned objects and other objects, and advantages will be clearly understood from the detailed explanation described in the following referring to the drawings.
Fig. 1 is a circuit diagram showing a conventional driving circuit;
Fig. 2 is a circuit diagram showing a thermal head as an electronic part realized in a conventional driving circuit;
Fig. 3 is a timing chart showing the operation of the thermal head shown in Fig. 2;
Fig. 4 is a timing chart showing the preheating operation;
Fig. 5 is a circuit diagram showing an embodiment 1 according to the present invention;
Fig. 6 is a circuit diagram showing an embodiment 2 according to the present invention;
Fig. 7 is a circuit diagram showing an embodiment 3 according to the present invention;
Fig. 8 is a circuit diagram showing an embodiment 4 according to the present invention;
Fig. 9 is a circuit diagram showing a related arrangement;
Fig. 10 is a circuit diagram showing another related arrangement;
Fig. 11 is a circuit diagram showing a further related arrangement;
Fig. 12 is a circuit diagram showing a still further related arrangement;
Fig. 13 is a circuit diagram of a thermal head as an electronic part;
Fig. 14 is a cross sectional view of the thermal head;

### Embodiment 1

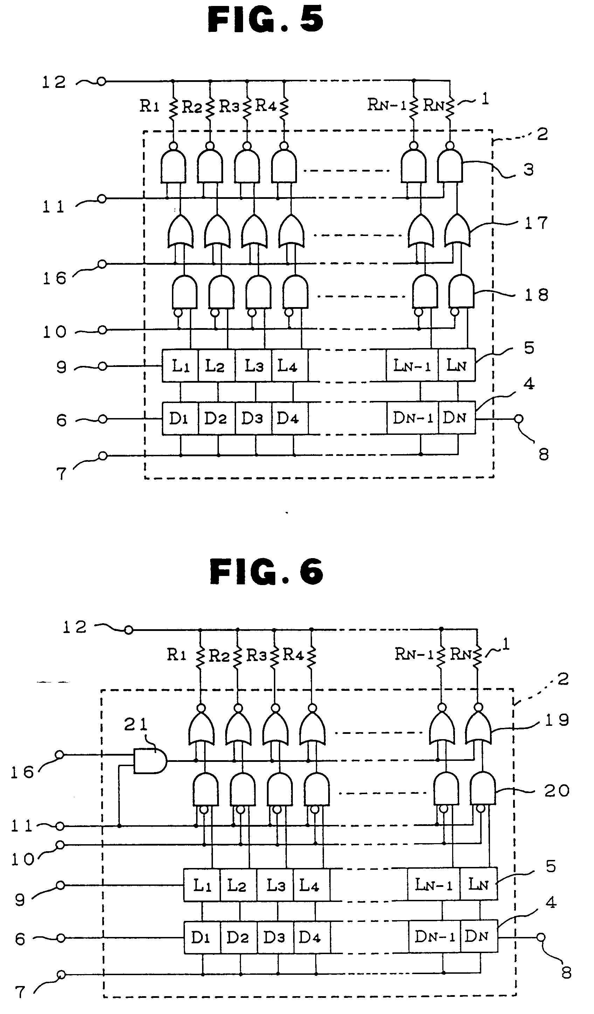

The embodiment 1 according to the present invention will be explained based on the drawings in the following. Fig. 5 is a circuit diagram showing a first embodiment. In the figure, 1 are exothermic resistors used as driven elements, 2 is a driving circuit, 3 are NAND circuits used as switching elements, 4 are shift registers, 5 are latch circuits for holding data, 6 is an input terminal, 7 is a clock pulse terminal, 8 is an output terminal, 9 is a latch terminal, 10 is a strobe terminal, 11 is a BEO terminal, and 12 is a common electrode; the parts given with the same symbols as those shown in Fig. 1 are the same as or equivalent to the conventional parts shown in Fig. 1, so that detailed explanation of these parts will be omitted.

A part 16 is an all-on terminal to which an all-on signal is input which is the signal information for driving the exothermic resistors independent of the driving information held in the latch circuits 5, 17 is an OR circuit which ORs the all-on signal with the driving information, and transmits it to the NAND circuits 3, and 18 is an AND circuit which gates the driving information held in the latch circuits 5 with a reverse signal of a strobe signal and inputs it to the OR circuit 17. Therefore, in this case, the NAND circuits 3 are gated by only the BEO signal.

Next, the operation will be explained. The operations of the shift registers 4 and the latch circuits 5 are similar to those of the conventional case. When the all-on signal to be input to the all-on terminal 16 becomes an H level, the output of each OR circuit becomes an H level independent of the driving information output from each of the latch circuits 5. Therefore, during the period of time in which BEO signal is in an H level, the output of each NAND circuit 3 becomes L level; thereby the voltage applied by the common electrode 12 makes currents flow through the exothermic resistors.

As described in the above, the period of time during which both all-on signal and BEO signal are in an H level is the preheating time; when printing is to be performed based on the driving information held in the latch circuits 5, the printing can be executed with the same operation as the conventional one by making the all-on signal be in an L level. In other words, the switching between preheating and data-on is made possible by a logic state of an all-on signal.

### Embodiment 2

Fig. 6 is a circuit diagram showing another embodiment of the present invention; the same symbols are given to the parts which are the same as those shown in Fig. 1, and the explanation for them will be omitted. In the figure, 19 are NOR circuits for use as switching elements, and 20 are AND circuits which input driving information from the latch circuits 5, a reverse signal of a strobe signal, and a BEO signal. A part 21 is an AND circuit as a signal information supply means which ANDs an all-on signal with a BEO signal and transmit it to respective NOR circuits 19.

Since the basic operation is similar to that of embodiment 1, its explanation will be omitted; however, a different point from embodiment 1 is that a 2 stage constitution of an AND circuit 20 and a NOR circuit 19 is adopted in place of a 3 stage constitution of an AND circuit 18, an OR circuit 17 and a NAND circuit 3, and the circuit construction is simplified by using an AND circuit 21 in which an all-on signal and a BEO signal are ANDed.

The driving circuit 2 is made to be an IC and the improvement of yield is requested, so that the simplification of the circuit is desired.

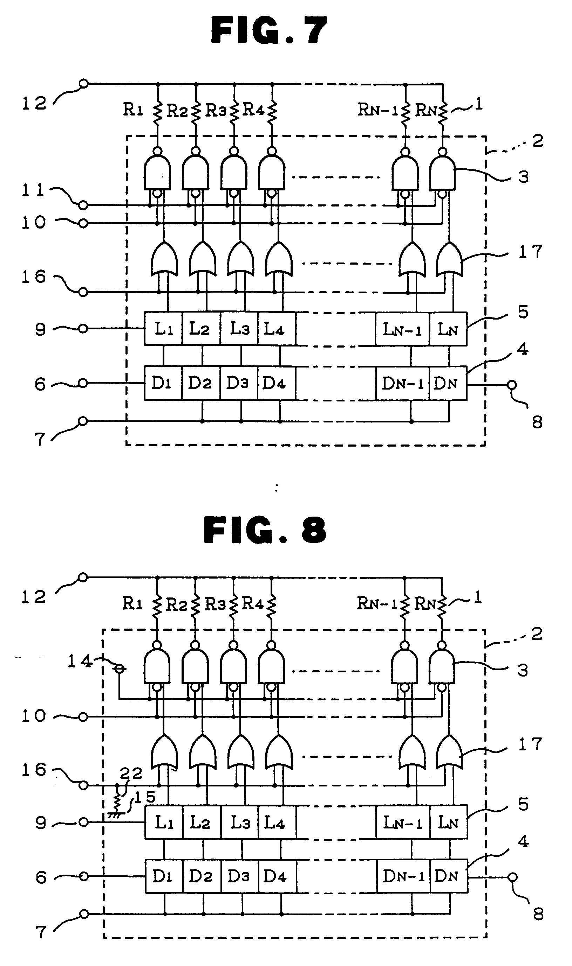

Fig. 7 is a circuit diagram showing a further embodiment of the present invention, and the same symbols are given to the parts corresponding to those in Fig. 5, therefore the explanation of them is omitted. In the third embodiment, the driving information held previously in the latch circuits 5 by the OR circuit 17 is ORed with an all-on signal, and the output, the reverse signal of the strobe signal and a BEO signal are transmitted to the NAND circuits 3 for executing the switching between preheating and data-on.

### Embodiment 4

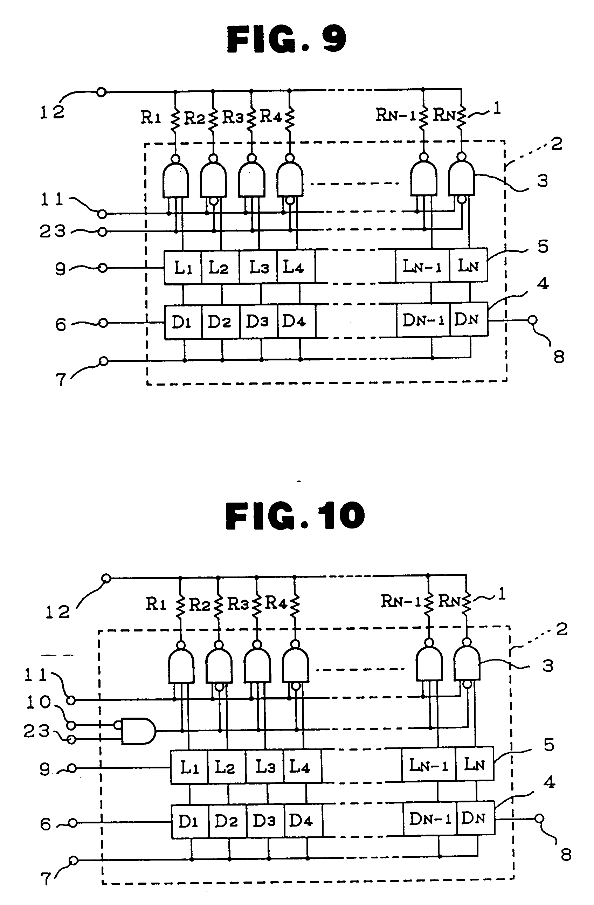

Fig. 8 is a circuit diagram showing a further embodiment of the present invention. The BEO signal circuit in this embodiment is connected to the power supply terminal 14 in the driving circuit 2 and an all-on signal circuit is connected to the grounding terminal 15 through a pull-down resistor 22 in the driving circuit 2.

In the circuit constitution as described above, at both the building-up and at the last transition of the power supply voltage, the BEO signal is changed, so that a signal supply from a power supply voltage detector circuit during the ON/OFF switching of the power supply circuit is not needed. When the connecting cable for the all-on signal from the exterior is broken, the all-on signal becomes an L level, and therefore serves as a safety measure for such breakage of a connecting cable.

In the case of Fig. 8, when the signal logic of the all-on signal is in the H level, preheating is executed. However, in contrast with this, a circuit constitution, in which preheating is executed when a signal logic is in the L level, is also possible. In this case, a safety measure can be devised by connecting the all-on signal circuit to the power supply terminal 14 through the pull-up resistor 22.

A safety measure in case of breakage of a connecting cable can be also devised by connecting the strobe signal circuit to the grounding terminal 15 or to the power supply terminal 14 through a pull-down resistor, or by connecting a BEO signal circuit to the grounding terminal 15 or to the power supply terminal 14 through a pull-up resistor, inside a thermal head. The following Figs. 9 to 13 show related circuit arrangements, which do not fall under the attached claims.

In Fig. 9 the same symbols are given to the parts which are similar to, those in Fig. 1 and hence a repeated explanation is avoided. In the figure, 23 is an FCON terminal to which an FCON signal is input as a signal for deciding the driving period of time which is to be input to the NAND circuit 3 in place of a conventional strobe signal.

The FCON signal input to each NAND circuit 3 is reversed for every other input, so that by making the FCON signal input from the FCON terminal 23 an intermittent pulse input, it can be arranged so that when the FCON signal is in an H level, the exothermic resistors 1 of odd numbers [R1, R3, ··· R(N - 1)] are switched on, and when the FCON signal is in an L level, the exothermic resistors 1 of even numbers (R2, R4, ··· RN) are switched on; thereby adjacent exothermic resistors 1 are not driven simultaneously.

Fig. 10 is a circuit diagram showing a related arrangement in which a strobe signal is incorporated which does not exist in Fig. 9 being replaced with an FCON signal, and continuous oscillation pulses are supplied as an FCON signal and adjacent exothermic resistors are arranged not to be simultaneously switched on similar to the Fig. 9 being controlled with a strobe signal and a BEO signal similar to a conventional case.

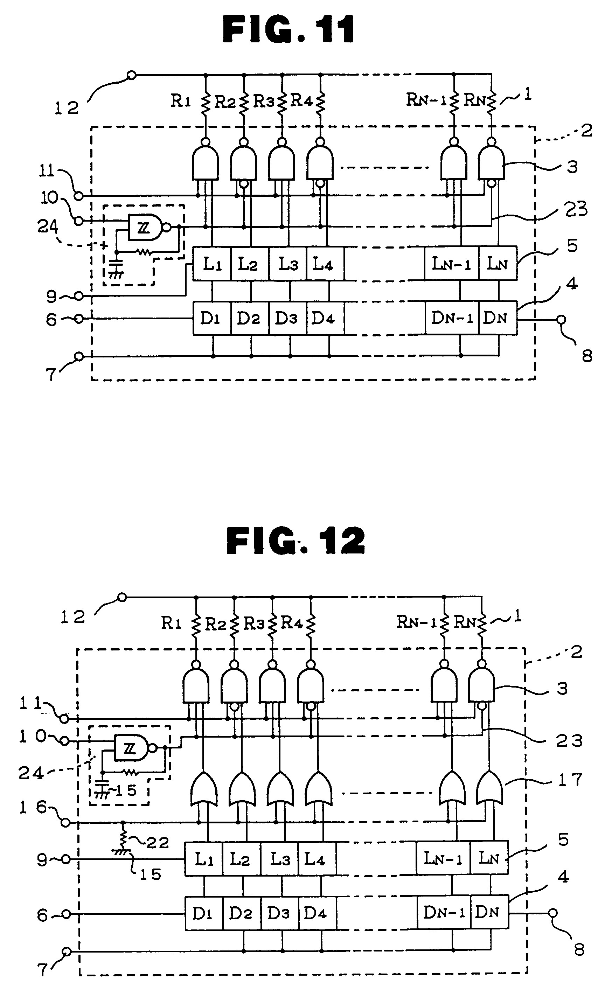

Fig. 11 is a further related circuit diagram. In order to eliminate the supply of an FCON signal from the exterior as in the case of Fig. 9 or 10, a pulse oscillator 24 is incorporated in the driving circuit 2 as a way of producing a pulse generation. Due to this, similar to a conventional case, the adjacent exothermic resistors 1 are not simultaneously switched on by supplying only a strobe signal and a BEO signal.

Fig. 12 is another related circuit diagram. Provided in the circuit are the OR circuits 17 which function as signal information supply means for supplying an all-on signal, which drives exothermic resistors 1 independent of the driving information held in the latch circuits 5, to the NAND circuits 3 which function as switching elements, and the NAND circuits 3 which function as switching elements and make adjacent ones operate reverse logic operations to each other for preventing the simultaneous driving of the adjacent exothermic resistors 1. The same symbols are given to the parts in Fig. 11 which are similar to those in Fig. 8 and the explanation of them is omitted.

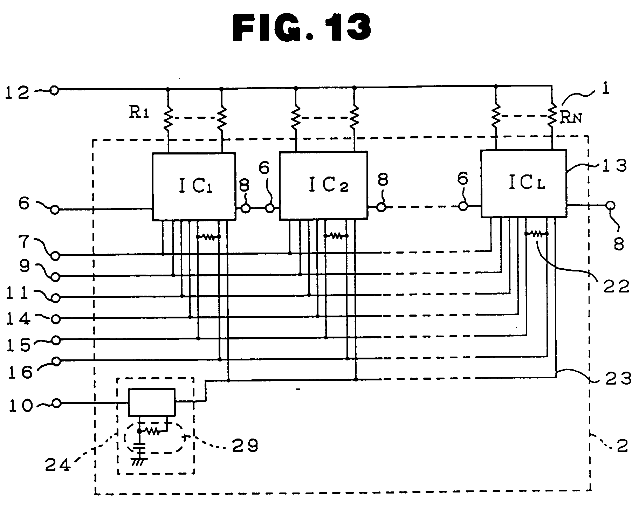

Fig. 13 is a related circuit diagram of a thermal head as an example of an electronic part which is actually manufactured based on the related circuit shown in Fig. 12. As in the conventional case, it is constituted, for example, by connecting 27 IC's 13 each made up of 64 bits.

Each of these IC's 13 is connected to a clock pulse terminal 7, a latch terminal 9, a strobe terminal 10, a BEO terminal 11, an all-on terminal 16, a power supply 14 and a grounding terminal 15, and an output terminal 8 of the previous stage is connected to an input terminal 6 of the next stage for N stages; for example, in the case of a thermal head of A4 size of 8 bits per mm, the circuit is constituted with shift registers and latch circuits of 1728 bits, and the number of exothermic resistors is 1728.

Part 22 is a pull-down resistor connected to the all-on terminal 16 and the grounding terminal 15, and it is connected to each of these IC's 13. The above-mentioned constitution can be easily achieved by forming a film resistor composed of plolysilicon, for example, between an aluminum wiring to the all-on terminal 16 and to the grounding terminal 15 in an IC, for example, when IC's 13 are manufactured. The resistance value of the resistor to be formed is roughly in the range of 50 kΩ to 200 kΩ, and the total pull-down resistance value between the all-on terminal 16 and the grounding terminal is roughly 1.85 kΩ to 7.4 kΩ, and it can be operated by the output of an ordinary logic IC.

It is desirable to connect a pull-down resistor 22 to each of these IC's for a safety measure against the breakage of a connecting wire to the IC 13, but it is not a necessary condition. Part 23 is an FCON signal based on the output signal of an oscillator circuit 24, and the oscillation frequency can be changed wish the change in connecting parts such as a resistor or a capacitor in the oscillator circuit 24.

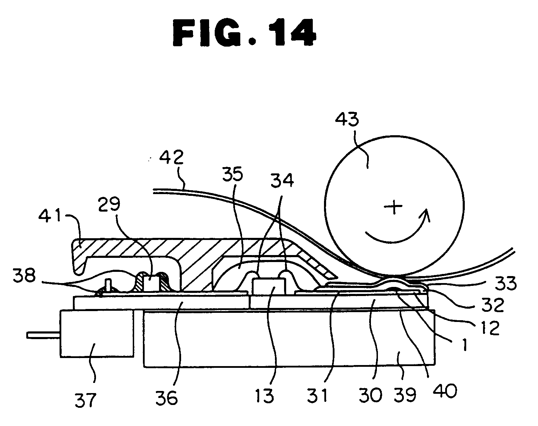

Fig. 14 shows a thermal head realized based on the connection diagram of the related circuit shown in Fig. 13. In the figure, 30 is a substrate (hereinafter referred to as an exothermic substrate) which is, for example, a ceramic substrate of alumina having the purity of about 96% covered with glass, and over the substrate a conductor pattern 31 is formed for forming exothermic resistors 1 and a common electrode 12, and further a protective film 32 and a high resistance film 33 are attached over it. IC's 13 are disposed over the exothermic substrate 30 and they are connected to the conductor pattern 31 by gold wire bondings.

Part 36 is a printed board, and the input signal leads of IC's 13 are also connected to the printed board 36 with gold wires 34, and the pattern of the printed board is extended to the connecting part of a connector 37 which is the connecting part of the thermal head to an external connecting cable, and the printed board 36 and the connector 37 are connected to each other with solder 38. A part 35 is a protective resin film for protecting the IC's 13 and the gold wires 34, and 29 is a connected part for the oscillator circuit 24 such as chip resistors or chip capacitors, being fixedly connected on the printed board 36 with solder 38.

Part 39 is a supporting base for the exothermic substrate 30 and the printed board 36 and it is formed with, for example, aluminum or iron, 40 is double faced adhesive tape for fixing the exothermic substrate and the printed board 36 on the supporting base 39, 41 is a cover to be a guide for conveying heat sensitive paper 42, and 43 is a platen roller for conveying the heat sensitive paper 42 being positioned above the exothermic resistors 1.

In this case, the high resistance film 33 can be omissible, but it has the effect of preventing static charge build up on the heat sensitive paper 42 during the paper movement, and it is connected to the common electrode or to the grounding terminal 15 at a position not shown in a drawing. The heat accumulation of an exothermic resistor varies greatly, depending on the material or dimensions such as thickness of the exothermic substrate 30, the common electrode 12, the conductor pattern 31, the protective film 32, and the high resistance film 33, and also it varies depending on the constitution of the exothermic resistors 1.

## Claims

1. A driving circuit for a thermal head printer, comprising:
holding means (5) for inputting and holding serial signal information representing printing information to be printed by a-plurality of driven thermal elements (1) in synchronization with a clock signal, said holding means (5) being adapted to output the printing information in parallel;
a plurality of switching elements (3) connected respectively to said driven thermal elements (1) for supplying driving information to said thermal elements (1), said switching elements (3) being adapted to perform switching operations to produce said driving information on the basis of said printing information output from said holding means (5) and preheating information;
preheating signal supply means (17 - 21) for supplying preheating information separately from the printing information supplied by said holding means (5),
characterized in that
said preheating signal supply means (17 - 21) are connected to directly supply said preheating information to said switching elements (3) and are adapted to output a preheating time signal representing an ON period and an OFF period of driving said driven thermal elements (1) as said preheating information; and
said switching elements (3) are adapted to perform said switching operations such that all of said driven thermal elements (1) are driven to be ON while said preheating time signal is in said ON period, and said driven thermal elements (1) are driven based on the printing information output from said holding means (5) while said preheating time signal is in said OFF period.

2. A driving circuit described in Claim 1, wherein an all-on signal supplied to said preheating signal supply means (17 - 21) may have a signal logic corresponding to a high state (H) or a low state (L).

3. A driving circuit described in Claim 2, further comprising a resistor (22) connected between an input terminal (16) of the preheating signal supply means (17 - 21) and a grounding terminal (15), when the signal logic of said all-on signal corresponds to the high state (H).

4. A driving circuit according to Claim 2, further comprising a resistor (22) connected between an input terminal (16) of the preheating signal supply means (17 - 21) and a power supply terminal (14), when the signal logic of said all-on signal corresponds to the low state (L).

## Patentansprüche

1. Treiberschaltung für einen Thermodrucker, die folgendes aufweist:
Halteeinrichtungen (5), um serielle Signalinformationen einzugeben und zu halten, die Druckinformationen repräsentieren, die von einer Vielzahl von getriebenen Thermoelementen (1) synchron mit einem Taktsignal zu drucken sind, wobei die Halteeinrichtungen (5) ausgebildet sind, um die Druckinformationen parallel auszugeben;
eine Vielzahl von Schaltelementen (3), die jeweils mit den getriebenen Thermoelementen (1) verbunden sind, um den Thermoelementen (1) Treiberinformationen zuzuführen, wobei die Schaltelemente (3) ausgebildet sind, um Schaltvorgänge auszuführen und die Treiberinformationen auf der Basis der von den Halteeinrichtungen (5) ausgegebenen Druckinformationen und von Vorheizinformation zu erzeugen;
Vorheizsignal-Zuführeinrichtungen (17 bis 21) zum Zuführen von Vorheizinformation separat von den von den Halteeinrichtungen (5) zugeführten Druckinformationen,
dadurch gekennzeichnet, daß
die Vorheizsignal-Zuführeinrichtungen (17 bis 21) geschaltet sind, um die Vorheizinformation direkt den Schaltelementen (3) zuzuführen, und ausgebildet sind, um ein Vorheizzeitsignal, das einen Zeitabschnitt eines eingeschalteten Zustands und einen Zeitabschnitt eines ausgeschalteten Zustands des Treibens der getriebenen Thermoelemente (1) repräsentiert, als die Vorheizinformation auszugeben; und
die Schaltelemente (3) ausgebildet sind, um die Schaltvorgänge so auszuführen, daß sämtliche getriebenen Thermoelemente (1) in den eingeschalteten Zustand getrieben werden, während das Vorheizzeitsignal in dem Zeitabschnitt des eingeschalteten Zustands ist, und die getriebenen Thermoelemente (1) auf der Basis der von den Halteeinrichtungen (5) ausgegebenen Druckinformationen getrieben werden, während das Vorheizzeitsignal in dem Zeitabschnitt des ausgeschalteten Zustands ist.

2. Treiberschaltung nach Anspruch 1, wobei ein den Vorheizsignal-Zuführeinrichtungen (17 bis 21) zugeführtes Alle-EIN-Signal eine Signallogik haben kann, die einem Hochpegel (H) oder einem Niedrigpegel (L) entsprechen kann.

3. Treiberschaltung nach Anspruch 2, die ferner einen Widerstand (22) aufweist, der zwischen einen Eingang (16) der Vorheizsignal-Zuführeinrichtungen (17 bis 21) und einen Masseanschluß (15) geschaltet ist, wenn die Signallogik des Alle-EIN-Signals dem Hochpegel (H) entspricht.

4. Treiberschaltung nach Anspruch 2, die ferner einen Widerstand (22) aufweist, der zwischen einen Eingang (16) der Vorheizsignal-Zuführeinrichtungen (17 bis 21) und einen Stromversorgungsanschluß (14) geschaltet ist, wenn die Signallogik des Alle-EIN-Signals dem Niedrigpegel (L) entspricht.

## Revendications

1. Circuit de commande pour une imprimante à tête thermique, comprenant :
des moyens de blocage (5) pour introduire et bloquer une information de signal en série représentant une information d'impression devant être imprimée par une pluralité d'éléments thermiques commandés (1) en synchronisme avec un signal d'horloge, lesdits moyens de blocage (5) étant adaptés pour délivrer l'information d'impression en parallèle;
une pluralité d'éléments de commutation (3) connectés respectivement auxdits éléments thermiques commandés (1) pour appliquer une information de commande auxdits éléments thermiques (1), lesdits éléments de commutation (3) étant adaptés pour exécuter des opérations de commutation de manière à produire ladite information de commande sur la base de ladite information d'impression délivrée par lesdits moyens de blocage (5) et d'une information de préchauffage;
des moyens (17-21) de délivrance d'un signal de préchauffage pour délivrer une information de préchauffage séparément de l'information d'impression envoyée par lesdits moyens de blocage (5),
caractérisé en ce que
lesdits moyens (17-21) de délivrance du signal de préchauffage sont connectés de manière à envoyer directement ladite information de préchauffage audit élément de commutation (3) et sont adaptés pour délivrer un signal de durée de préchauffage représentant une période d'ACTIVATION et une période d'ARRET de commande desdits éléments thermiques commandés (1), en tant que ladite information de préchauffage; et
lesdits éléments de commutation (3) sont adaptés pour exécuter lesdites opérations de commutation de telle sorte que la totalité desdits éléments thermiques commandés (1) sont commandés de manière à être ACTIVÉS alors que ledit signal de durée de préchauffage est dans ladite période d'ACTIVATION, et que lesdits éléments thermiques commandés (1) sont commandés sur la base de la formation d'impulsions délivrée par lesdits moyens de blocage (5) alors que ledit signal de durée de préchauffage est dans ladite période d'ARRET.

2. Circuit de commande selon la revendication 1, dans lequel un signal "tous les éléments activés" envoyé auxdits moyens (17-21) de délivrance du signal de préchauffage peut posséder une logique de signal correspondant à un niveau haut (H) ou un niveau bas (L).

3. Circuit de commande selon la revendication 2, comprenant en outre une résistance (22) connectée entre une borne d'entrée (16) des moyens (17-21) de délivrance du signal de préchauffage et une borne de mise à la masse (15), lorsque la logique dudit signal "tous les éléments activés" correspond au niveau haut "H".

4. Circuit de commande selon la revendication 2, comprenant en outre une résistance (22) connectée entre une borne d'entrée (16) des moyens (17-21) de délivrance du signal de préchauffage et une borne d'alimentation en énergie (14), lorsque la logique dudit signal "tous les éléments activés" correspond au niveau bas (L).
